# EUROPEAN PATENT APPLICATION

(11) **EP 2 230 839 A1**
(43) Date of publication of application: **22.09.2010**
(21) Application number: 09155315.6
(22) Date of filing: 17.03.2009
(51) Int. Cl.: H04N 5/445, H04N 5/765

(54) **Presentation of video content**

(71) Applicant: Koninklijke Philips Electronics N.V., 5621 BA Eindhoven (NL)
(72) Inventor: The designation of the inventor has not yet been filed
(74) Representative: Damen, Daniel Martijn

(57) **Abstract**

A display apparatus comprises a display on which first video content of a video signal is presented. In addition, second video content is simultaneously presented e.g. superimposed on the first video content. A presentation processor (209) determines a first characteristic for the presentation of the first video content and a characteristics processor (211) determines a presentation characteristic for the second video content from the first characteristic. A transmitter (213) transmits the presentation characteristic to an external source of the second video content. A single device (401) may generate the video signal comprising both the first and second video content. In this case a characteristic of the overlaying is adjusted in response to the presentation characteristic. The invention may provide an advantageous adaptation of secondary (overlay) information to the current characteristics experienced when presenting primary video content.

## Description

### FIELD OF THE INVENTION

The invention relates to displaying of video signals in a display system, and in particular, but not exclusively to presentation of video content on a television or monitor.

### BACKGROUND OF THE INVENTION

Presentation of video content is becoming increasingly ubiquitous and varied. Specifically, an increasing amount of different video content is generated by an increasing variety of video sources. Furthermore, different types of video content are increasingly combined such that a plurality of video content types is presented simultaneously. For example, it is often used to overlay a primary video content (such as a film or other motion video clip) with additional video graphics or objects such as e.g. user interface graphics, subtitles, station logo's etc. As another example, it has been proposed to overlay a primary video content with other motion video content such as e.g. a secondary video program (providing e.g. a picture-in-picture effect).

In addition to the increased variety in video sources, an increased variety of displays have been introduced. For example, computer monitors can be procured in different formats, sizes, resolutions, etc. As another example, televisions having different aspect ratios such as 4:3; 16:9, and more recently 2.39:1 or 21:9 aspect ratio televisions are being introduced. Furthermore, the rendering quality and processing may vary substantially from one display system to the other and indeed may switch dynamically dependent on e.g. characteristics of the video content that is presented. For example, widescreen televisions may apply different viewing modes (e.g. pan and scan cropping; pillar box window, letter box window, geometric distortion etc).

Thus, it is desirable that a more flexible display approach can be provided which may allow some adaptation or adjustment to compensate for the variations in the video content generation, processing and presentation.

### SUMMARY OF THE INVENTION

Accordingly, the Invention seeks to preferably mitigate, alleviate or eliminate one or more of the above mentioned disadvantages singly or in any combination.

According to an aspect of the invention there is provided display apparatus comprising: a display; means for receiving a video signal comprising first video content for presentation on the display; means for determining a first characteristic for presentation of the first video content on the display; means for determining a presentation characteristic for presentation of second video content on the display simultaneously with the first video content in response to the first characteristic; and means for communicating the presentation characteristic to an external source of the second video content.

The invention may provide an improved presentation of video content. In particular, an improved adaptation and customization of the second video content to the current characteristics and conditions may be achieved. A dynamic communication of a rendering characteristic may provide an adaptation to current conditions.

In many embodiments, the approach may e.g. allow that secondary video content such as user interface graphics, video objects, subtitles, logos, or the output from interactive applications such as MHEG (Multimedia and Hypermedia Experts Group) or MHP (Multimedia Home Platform) data etc are presented inappropriately for the current operation of the display and for the characteristics of the display. For example, the approach may allow the external video source to ensure that the second video content is always within a visible area of a current presentation window regardless of which viewing mode is applied by the display unit and regardless of the characteristics of the first video content. This may e.g. be particularly advantageous in a system wherein the display apparatus is arranged to adapt a presentation characteristic/window depending on e.g. a current aspect ratio of the first video content.

The approach may furthermore allow facilitated operation, implementation or design. For example, a reduced processing of the external source and/or the display apparatus can often be achieved as the second video content can be adapted based on the presentation characteristic thereby obviating the need for other video processing in the display apparatus or the external source. E.g. the external source does not need to process the video signal in order to determine a characteristic of the first video content and the processing in the display system may be reduced in many embodiments since the second video content may already be generated with suitable characteristics and therefore will need no further processing or specific consideration.

Specifically, the inventors have realized that whereas some display systems may adapt operation for different use scenarios, this adaptation may often depend on the main video content being presented. The inventors have specifically realized that such an adaptation may detrimentally affect the presentation of secondary video content that is presented simultaneously with the primary video content. The inventors have realized that this may be mitigated by providing information to a source of the secondary video content thereby allowing the secondary video content to be adapted in response to the current presentation characteristics that will be applied to the secondary video content as a consequence of the presentation of the first video content.

The presentation characteristic may be a characteristic of the rendering/presentation of the second video content and/or a processing of the second video content prior to presentation. The external source may also provide the first video content. Specifically, the video signal may comprise both the first video content and the second video content. In some embodiments, the external source is separate from a source of the video signal. The second video content may be provided e.g. as a second video signal, as part of the video signal, or as data describing the second video content, such as e.g. data characterizing graphic objects.

The second video content may specifically be overlay video content, such as one or more graphic objects or video objects, for the first video content.

In accordance with an optional feature of the invention, the presentation characteristic is indicative of at least one of: a size of a display window for presentation of the second video content; an aspect ratio of a display window for presentation of the second video content; a position of a display window for presentation of the second video content; a size of a display window for presentation of the first video content; an aspect ratio of a display window for presentation of the first video content; a position of a display window for presentation of the first video content; a pixel value range for presentation of the second video content; a pixel value range for presentation of the first video content; and a color characteristic.

This may provide a highly advantageous adaptation in many embodiments.

In accordance with an optional feature of the invention, the presentation characteristic is a presentation window characteristic.

This may provide a highly advantageous adaptation in many embodiments. For example, the presentation window characteristic may be indicative of a rendering/presentation (sub)window for the second video content. For example, the display apparatus may crop the video signal when presenting the first video content and the presentation window characteristic may indicate a safe window within the display format of the video signal that is visible following the crop. This may allow the external source to ensure that the second video content is restricted to the safe, visible window.

In accordance with an optional feature of the invention, the display apparatus is further arranged to communicate an indication of a full display window for the display to the external source.

This may provide a highly advantageous adaptation in many embodiments. In particular, the rendering window characteristic may be relative to the full display window. For example, the rendering window characteristic may indicate that a current presentation window has an aspect ratio of 16:9, and the indication of the full display window may allow the external source to adapt the second video content depending on whether the 16:9 window is presented on a 16:9 or 2.39:1 aspect ratio display.

In accordance with an optional feature of the invention, the display apparatus is further arranged to switch between different presentation window modes for the first video content and wherein the presentation window characteristic is indicative of a current presentation window mode.

This may provide a highly advantageous adaptation in many embodiments. The switching of rendering/presentation modes may be in response to a characteristic of the first video content (e.g. the aspect ratio may be selected dependent on an aspect ratio of the first video content) or may e.g. be a manual user selection. The presentation window parameter may for example be transmitted at regular intervals and/or when a presentation window switch mode occurs.

In accordance with an optional feature of the invention, the presentation characteristic is indicative of a geometric distortion of the first video content when presented on the display.

This may provide an improved adaptation in many embodiments. For example, in many display systems anamorphic compression may be performed at a video source followed by anamorphic stretching at the display apparatus (e.g. in order to communicate a 16:9 format via a 4:3 signal or a 2.39:1 format via a 16:9 signal). In this case, the rendering characteristic may be indicative of whether the geometric distortion (anamorphic stretching in this case) is performed or not. The external source may accordingly use this information to decide whether to apply a geometric pre-distortion to the second video content or not.

In accordance with an optional feature of the invention, the presentation characteristic is indicative of an availability of a secondary display means for presenting the second video content.

This may provide an improved adaptation in many embodiments. In particular, it may allow the second video content to be generated to match different options of the display. For example, if a display apparatus has an optional second display element, the second video content may be provided for presentation on this second display (e.g. projected to a wall) and if not, it may be combined/ overlaid the first video content for presentation on the same display. The rendering characteristic may be indicative of a characteristic of the secondary display means. For example, the rendering characteristic may identify the options that can be presented by the second display means (and so e.g. display colors of the first and second display may be coordinated).

According to an aspect of the invention there is provided a video apparatus comprising: a video port for coupling the video apparatus to a display unit; a video content source for providing first video content; an overlay processor for generating an output video signal comprising both the first video content and overlay video content and for providing the output video signal to the video port; means for receiving a presentation characteristic from the display unit, the presentation characteristic being indicative of a presentation of the output video signal by the display unit; and wherein the overlay processor is arranged to adjust a characteristic of the overlay video content in response to the presentation characteristic.

The invention may provide an improved presentation of overlay/secondary video content. In particular, an improved adaptation and customization of overlay/secondary video content to the current characteristics and conditions may be achieved. A dynamic adaptation of the overlay/secondary video content to the current presentation/rendering characteristics performed by a display may be achieved. The current presentation/rendering characteristics may be dependent on the first/primary video content.

In many embodiments, the approach may e.g. allow that overlaid video content generated by a remote source, such as user interface graphics, video objects, subtitles, logos etc, is presented appropriately for the current operation of the display and for the characteristics of the display. Thus, an automatic adaptation to different displays, different rendering modes and characteristics etc can be achieved. For example, the approach may allow the video apparatus to adapt the overlaying of the second video content such that it can be ensured that it is within a visible area of a current presentation window. This may e.g. be particularly advantageous in a system where the display apparatus is arranged to adapt a presentation window depending on e.g. a current aspect ratio of the first video content.

The approach may furthermore allow facilitated operation, implementation or design. For example, a reduced processing of the video apparatus and/or the display unit can often be achieved as the second video content can be adapted based on the presentation characteristic thereby obviating the need for other video processing to be performed in the display unit or in the external source. E.g. the video apparatus does not need to process the video signal in order to determine a characteristic of the first video content and the processing in the display system may be reduced in many embodiments since the second video content may already be generated with suitable characteristics.

The overlay video content may specifically be changed relative to the first video content. E.g. a characteristic of the overlay video content (e.g. a size, aspect ratio, color etc) may be set dependent on the presentation characteristic without the same change being applied to the first video content. In particular, the first video content may be independent of the presentation characteristic and may e.g. be fixed and not affected by any signal received from the display unit.

The presentation characteristics may be a characteristic of the presentation or rendering of the second video content and/or a processing of the second video content by the display unit.

The display unit may be the display apparatus of claim 1. The video apparatus may be the external source of claim 1. In some embodiments, the output video signal may have a fixed format, such as a fixed aspect ratio. The overlay processor may overlay the overlay video content on the video signal. The output video signal may specifically comprise video frames comprising both first video content and overlay video content. The presentation characteristic may specifically be indicative of a presentation of the first video content by the display unit.

In accordance with an optional feature of the invention, the presentation characteristic comprises a rendering window characteristic for a presentation window for the output video signal; the presentation window characteristic comprising at least one of an aspect ratio, a size and a position of the presentation window.

This may provide a particularly advantageous overlaying of video content. In particular, it may allow a particularly advantageous approach for adapting overlaying of video content to specific current rendering/presentation characteristics of the display unit. For example, overlaying may automatically be adapted to different aspect ratios used by the display unit thereby allowing the entire available window to be used while ensuring that all overlay video content is visible.

In accordance with an optional feature of the invention, the video apparatus further comprises means for determining a content window characteristic for a window of the output video signal corresponding to the first video content; and wherein the overlay processor is further arranged to adjust a characteristic of the overlay video content in response to the content window characteristic.

This may provide a particularly advantageous overlaying of video content. Specifically, the display unit may in many embodiments adapt the presentation characteristics, such as the cropping or aspect ratio, depending on the format of the primary video content and the feature may allow the video apparatus to take this into account.

In accordance with an optional feature of the invention, the overlay processor is arranged to select a position of an overlay video object of the overlay video content in response to the presentation characteristic.

This may provide a particularly advantageous overlaying of secondary video content. In particular, it may allow a particularly advantageous approach for adapting overlaying of video content to specific current rendering/presentation characteristics of the display unit. E.g. it may allow the video apparatus to dynamically locate overlay video objects towards the edges of the visible image presented to the viewer while ensuring that the overlay video content is not cropped by the display unit.

In accordance with an optional feature of the invention, the overlay processor is arranged to select a dimension of an overlay video obj ect of the overlay video content in response to the presentation characteristic.

This may provide a particularly advantageous overlaying of video content. E.g. it may allow the video apparatus to compensate the second video content for any geometric manipulations that are performed by the display and/or may allow an improved adaptation of the overlay video content to provide an image that is suitable for the specific current presentation characteristics.

In accordance with an optional feature of the invention, the overlay processor is arranged to select a geometric distortion of an overlay video object of the overlay video content in response to the presentation characteristic.

This may provide a particularly advantageous overlaying of video content. E.g. it may allow the video apparatus to compensate the second video content for any geometric distortions that are performed by the display. For example, if the display performs a stretching of the first video content in order to adapt to a current presentation window, the second video content may be pre-compensated such that the desired overlay objects are presented to the user following the distortion by the display unit.

In accordance with an optional feature of the invention, the presentation characteristic is indicative of a characteristic of a current visible window of the output video signal; and the overlay processor is arranged to adjust the second video content to be within the current visible window.

This may provide a particularly advantageous overlaying of video content and may typically ensure that all overlaid video content is visible to a viewer. The visible window may be dynamically changed resulting in a dynamic movement of at least one overlay video object in the display window represented by the output video signal. The visible window may (at least sometimes) be a sub-window of the full display window represented by the output video signal.

In accordance with an optional feature of the invention, the presentation characteristic comprises an aspect ratio for a displayed signal, and the overlay processor is arranged to determine the current visible window in response to the aspect ratio and an aspect ratio for the output video signal.

This may provide a particularly advantageous way of determining a sub-window that is suitable for overlaying of video content.

In accordance with an optional feature of the invention, the overlay processor is arranged to modify a position at least one graphic object to be adjacent an edge of the current visible window.

The overlay processor may be arranged to bias a location of overlay video object towards the edge of the current visible sub-window. This may provide an improved overlaying of video content and may specifically reduce interference of the secondary/overlay video content with the first video content.

In accordance with an optional feature of the invention, the overlay processor is arranged to locate at least some of the second video content outside a window corresponding to the first video content but within the current visible window when the window corresponding to the first video content is smaller than the current visible window.

This may provide an improved overlaying of video content and may specifically reduce interference of the secondary/overlay video content with the first video content.

In accordance with an optional feature of the invention, the presentation characteristic is indicative of a characteristic of a sub-window of a current visible window of the output video signal; and the overlay processor is arranged to adjust the second video content to be within the sub-window.

This may in many embodiments provide an improved presentation of overlay video content. In particular, it may in many scenarios allow overlay content to automatically be moved out of black areas of a presented signal thereby allowing the display unit to zoom in to reduce such black areas.

In accordance with an optional feature of the invention, the video content generator is arranged to modify a parameter of the first video content in response to the presentation characteristic.

This may in many embodiments and scenarios allow an improved quality of the presented first video content on the display.

In accordance with an optional feature of the invention, the parameter is an upscaling parameter.

This may in many embodiments and scenarios allow an improved quality of the presented first video content on the display.

According to an aspect of the invention there is provided a method of operation for a display apparatus including a display; the method comprising: receiving a video signal comprising first video content for presentation on the display; determining a first characteristic for presentation of the first video content on the display; determining a presentation characteristic for presentation of second video content on the display simultaneously with the first video content in response to the first characteristic; and communicating the presentation characteristic to an external source of the second video content.

According to an aspect of the invention there is provided a method of operation for a video apparatus including a video port for coupling the video apparatus to a display unit; the method comprising: providing first video content; generating an output video signal comprising both the first video content and overlay video content; providing the output video signal to the video port; receiving a presentation characteristic from the display unit, the presentation characteristic being indicative of a presentation of the output video signal by the display unit; and adjusting a characteristic of the overlay video content in response to the presentation characteristic.

These and other aspects, features and advantages of the invention will be apparent from and elucidated with reference to the embodiment(s) described hereinafter.

### BRIEF DESCRIPTION OF THE DRAWINGS

Embodiments of the invention will be described, by way of example only, with reference to the drawings, in which
Figure 1 illustrates an example of a display system in accordance with some embodiments of the invention;
Figure 2 illustrates an example of elements of a display unit in accordance with some embodiments of the invention;
Figure 3 illustrates an example of dynamic ranges for different displays;
Figure 4 illustrates an example of a display system in accordance with some embodiments of the invention;
Figure 5 illustrates an example of a video apparatus in accordance with some embodiments of the invention;
Figure 6 illustrates an example of an image that may be presented in a display system in accordance with some embodiments of the invention;
Figure 7 illustrates an example of an image that may be presented in a display system;
Figure 8 illustrates an example of an image that may be presented in a display system in accordance with some embodiments of the invention; and
Figure 9 illustrates an example of an image that may be presented in a display system in accordance with some embodiments of the invention.

### DETAILED DESCRIPTION OF SOME EMBODIMENTS OF THE INVENTION

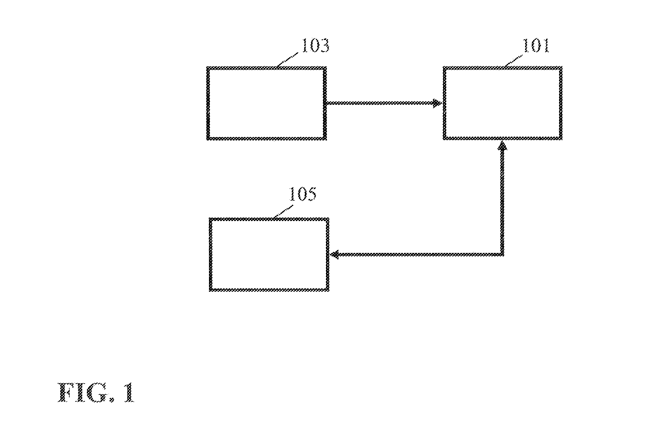

Fig.1 illustrates an example of a video display system comprising a display apparatus/unit 101 which comprises a display for presenting images. The system furthermore comprises a video source 103 which provides a video signal to the display unit 101. The video signal may for example comprise still or moving images. The display unit 101 may for example be a television or a monitor arranged to receive e.g. an encoded digital video signal, a non-encoded digital video signal and/or an analog video signal. The video source 103 may for example be a set-top box such as a DVD player, a Personal Video Recorder (PVR), a satellite receiver or similar.

Thus, the video source 103 provides a video signal containing some video content which will henceforth be referred to as primary video content. The primary video content may for example be a film, a television program or digital images or photos. In the system, the primary video content is presented by the display unit together with secondary video content which will henceforth be referred to as overlay or secondary video content. The overlay video content may for example be subtitles, user interface information, station logo's, a secondary video content stream etc.

As will be described later, the overlay video content may be combined with the primary video content in the video signal provided from the video source 103 (and thus overlaying of the overlay video content on the primary video content may be performed in the video source 103). However, in the example of Fig. 1, the overlay video content is provided by a separate overlay source 105 coupled to the display unit 101. Thus, in the example, the display unit 101 receives primary video content from the video source 103 and overlay video content from the overlay source and combines this for simultaneous presentation on the display. Specifically, the display unit may superimpose the overlay video content on the primary video content.

In the system, the display unit 101 communicates information to the overlay source 105 that allows this to adapt the overlay video content to suit the current presentation characteristics for the primary video content.

As a specific example, the video source 103 may be a DVD player that provides an output signal in a 4:3 format in order to provide compatibility with conventional 4:3 systems. However, the 4:3 format video signal may e.g. contain primary video content in an anamorphic 16:9 aspect ratio or in a non-predistorted 4:3 format. If the display unit 101 has a 16:9 format, the display unit 101 may proceed to present primary video content in the anamorphic 16:9 format by stretching the 4:3 video signal to fit the entire display. However, a 4:3 primary video content will be presented in a 4:3 pillar box format without any geometric distortion. Thus, the presentation and processing performed by the display unit 101 depends on the characteristics of the primary video content. In the system, the display unit 101 transmits data to the overlay source 105 indicating a current presentation characteristic that will be applied to the overlay video content. Specifically, for an anamorphic 16:9 primary video content, the overlay video content will be stretched whereas for a 4:3 primary video content, the overlay video content will not be stretched. The information of the current presentation characteristic is then used by the external overlay source 105 to adapt the provided overlay video content. For example, for the anamorphic 16:9 scenario, the overlay video content may be pre-compressed to compensate for the stretching in the display unit 101 whereas no pre-compression is performed for the 4:3 scenario. Accordingly, the overlay source 105 will automatically process the overlay video content such that it is appropriately presented.

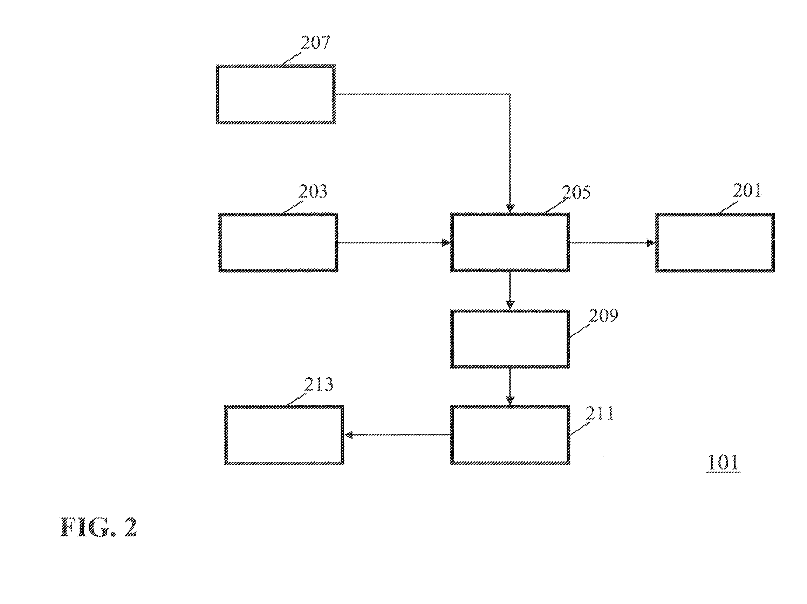

Fig. 2 illustrates the display unit 101 of Fig. 1 in more detail. The display unit 101 comprises a display panel 201 which is arranged to display images to viewers. In the example, the display panel is an LCD or plasma display but it will be appreciated that in other embodiments other display types may be used, such as e.g. a Cathode Ray Tube or similar.

The display unit 101 further comprises a first video input 203 which receives a video signal from the video source 103. In the example, the first video input comprises an input video connecter that may connect the display unit 101 to the video source 103 via a suitable video cable. The received video signal may specifically be in accordance with a suitable video standard, such as a DisplayPort^{™}, a HDMI^{™} or DVI^{™} interface standard.

The first video input 203 is coupled to a display controller 205 which is further coupled to the display 201. The display controller 205 is capable of processing the received video signal in order to generate a display signal for controlling the image of the display 201. This processing may for example include decoding of a digitally encoded signal to generate individual pixel values (such as RGB values) for the display 201.

Furthermore, the display controller 205 may be arranged to adapt the presentation of the primary video content from the video signal prior to this being presented. As a specific example, the video signal may have a fixed 4:3 aspect ratio but may include primary video content that at some times is in a 4:3 aspect ratio, at other times is a in letter boxed 16:9 aspect ratio, and at yet other times is in an anamorphic 16:9 aspect ratio (thus filling out the entire 4:3 window of the video signal). In the example, the display 201 has an aspect ratio of 16:9 and the display controller 205 is arranged process the video signal such that the optimal presentation of the primary video content is achieved. Thus, in a first mode, a 4:3 aspect ratio signal is presented in a pillar box format thereby leaving unused (typically black) bars at the side of the primary video content. Further, in a second mode, letter boxed 16:9 aspect ratio video content is enlarged to fill the entire 16:9 display by cropping the black bars of the 4:3 window of the video signal (thus resulting in the black areas of the 4:3 window of the video signal being invisible). Finally, in a third mode, anamorphic 16:9 aspect ratio is stretched to fill out the entire 16:9 display without cropping of the 4:3 window of the window signal (but by geometrically distorting the 4:3 window). In the system, the display controller may automatically detect which mode to use by analyzing the video signal to determine the current presentation of the primary video content. In other examples, a user may e.g. manually switch between different viewing modes.

In some cases (as will be described in more detail later), the received video signal from the video source 103 may further comprise overlay video content, such as e.g. subtitles, user interface information or logos. This overlay video content will accordingly be modified in the same way as the primary video content. In the specific example of Fig. 2, overlay video content is received from a separate overlay source 105 and the display controller 205 is coupled to a second video input 207 which receives this information. In the example, the overlay video content is processed differently in the different modes of operation. For example, the overlay video content may comprise an overlay video object, such as a logo, which is presented on the display 201 simultaneously with the primary video content but with different characteristics depending on the presentation mode applied. For example, the overlaying may be performed prior to the viewing mode processing.

The overlay video object may for example be provided as a video signal or may e.g. be provided as data describing one or more video overlay objects. For example, the overlay video objects may be a digitally encoded graphic object.

As an example, in the first mode of operation, a pillar box presentation format is used for the 4:3 aspect ratio primary video content. In this situation, the display controller 205 may locate the overlay video objects in one of the black bars on either side of the primary video content. In the second mode, the overlay video object will be superimposed on the primary video content but located within a central 16:9 aspect ratio of the window of the input signal (i.e. avoiding areas which are cropped by the display controller 205). In the third mode, the overlay video object is also superimposed on the primary video content but is in this situation located at the edge (e.g. top) of the 4:3 window since cropping is performed. Furthermore, in the third mode, the overlay video object is also geometrically pre-distorted (stretched) in accordance with the anamorphic format.

In the display unit 101 of Fig. 2, the characteristics of the presentation of the secondary/overlay video content thus vary dynamically depending on the first video content.

In the system, the display unit 101 comprises a presentation processor 209 which is arranged to determine a first characteristic for the presentation of the first video content on the display 201. In the specific example, the presentation processor 203 may simply determine whether the display unit 101 operates in the first, second or third viewing mode. It will be appreciated that in other embodiments other and more complex characteristics may be determined. E.g. the first characteristic may include one more of an aspect ratio, a geometric distortion, a size etc. of a window used to present the primary video content.

The presentation processor 209 is coupled to a characteristics processor 211 which is arranged to determine a presentation characteristic for the presentation of overlay video content on the display 201. In some examples, the presentation characteristic may simply be the same as the first characteristic, such as e.g. an indication of whether the display unit 101 is operating in the first, second or third viewing mode. However, it will be appreciated that in other embodiments, the presentation characteristic for the overlay video content may be derived from the characteristic for the presentation of the primary video content but may be different. For example, based on a display window for the primary video content, a smaller display window for the secondary video content may be derived.

The characteristics processor 211 is coupled to a transmitter 213 which is arranged to transmit an indication of the presentation characteristic to the source of the secondary video content. As a low complexity example, the current viewing mode for the primary video content may be communicated to the overlay source 105.

This may allow the overlay source 105 to modify the overlay video content in response to the presentation characteristic. Thus, the overlay source 105 will be provided with information that indicates how the specific display currently used will present the overlay video content. Thus, the approach allows not only for the overlay source 105 to adapt the overlay video content to the specific characteristics of the specific display used (thus improving compatibility with different displays having different characteristics and capabilities), but also allows the overlay source 105 to dynamically adapt the overlay video content to the current display operation of the display unit 201. Specifically, the overlay source 105 can adapt the overlay video content to match the presentation of the primary video content, i.e. it may allow the overlay video content to be adapted to the primary video content without requiring any knowledge of the primary video content to be provided from the video source 103.

For example, if the display apparatus 101 is operating in the first mode of operation, the overlay source 105 can provide a video object which is particularly suited for presentation in the black bars on the side of the window used to present the primary video content. As a specific example, the overlay source 105 may generate a video object that is relatively high and narrow and which has a color suitable for projection on a black background (e.g. a white object on a transparent background may be provided). If the display unit 101 is operating in the second mode, the overlay source 105 may instead provide a video object that is suitable for presentation against a background which may have a varying video content. For example, a semi-transparent grey background may be added to ensure that the overlay video content is visible with both light and dark backgrounds. Furthermore, a different dimension of the overlay object may be used (e.g. a square object rather than a high and narrow object). Also, as the cropping performed by the display controller 205 in the second mode effectively corresponds to a zooming and thus enlargement of the video content, the overlay video object may be reduced in size by the overlay source 105 to compensate for this enlargement. In the third mode, the same video object may be generated by the overlay source 105 as in the second mode (e.g. using a semi-transparent grey background) but the overlay source 105 may use the original size of the object (as no zooming is performed). Furthermore, an anamorphic compression may be applied to the object in order to compensate for the anamorphic stretching of the primary video content.

Thus, in the system of Fig. 1, a much improved presentation of secondary video content together with primary video content can be achieved. Specifically, the secondary/overlay video content can be adapted to suit the specific presentation of the primary video content such that the specific characteristics of this presentation can be compensated for or exploited.

It will be appreciated the different means of communicating between the display unit 101 and the video source 103 and/or the overlay source 105 may be used. For example, the video source 103 may be coupled to the display unit 101 via a suitable video cable or may alternatively (or additionally) be coupled via a direct wireless link or e.g. via a wireless or wired network. Similarly, the overlay source 105 may be coupled to the display unit 101 via a suitable video cable or may alternatively (or additionally) be connected via a wireless connection or e.g. via a wireless or wired network. Also, the same or different communication means may be used from the overlay source 105 to the display unit 101 as from the display unit 101 to the overlay processor 105.

In the specific example, the video source 103 is coupled to the display unit 101 via a suitable video cable whereas the overlay source 105 and display unit 101 are coupled together via a wireless network, such as a Wifi^{™} network. Such an arrangement may be advantageous in many embodiments as the overlay video content may typically be represented by less data than the primary video content. For example, it may be represented by text or graphics data that specify a video object rather than by a video signal comprising sequential frames. Also, the communication of the presentation characteristic to the overlay source 105 will typically only require a low data rate and is not sensitive to high delays, and can accordingly be supported by many networks. Indeed, in some embodiments, the communication (in either or both directions) between the overlay source 105 and the display unit 101 may be via the Internet.

It will also be appreciated that the video source 103 may be a local entity connected directly to the display unit 101, such as a set top box coupled to a television, or may e.g. be a remote source coupled to the display unit 101 via a communication system or network. For example, the video signal may be provided to the display unit 101 from a remote video server via the Internet. The video source 103 may e.g. be an Internet based video server application providing the video information as part of an Internet based protocol. For example, the video source 103 may be an Internet video application, such as e.g. "Youtube" or similar. It will also be appreciated that in many embodiments, the overlay source may be provided from such variety of sources. Specifically, the overlay source 105 may be an Internet application which may modify a characteristic of the provided video data in response to the presentation characteristic. It will also be appreciated that the overlay source 105 may for example be an interactive application generating MHEG or MHP data.

It will be appreciated that in different embodiments and scenarios, different presentation characteristics may be determined and communicated to the overlay source 105.

For example, as in the previous examples, the presentation characteristic may be a presentation window characteristic indicative of a presentation window used to present the primary and/or secondary video content. The presentation window may be determined and/or indicated in relation to a full window of the display and/or represented by the video signal from the video source 101.

For example, the video signal may represent a 4:3 aspect ratio but may comprise primary video content in a variety of different aspect ratios including e.g. 21:9, 16:9 and 4:3 aspect ratios. Similarly, the display will have a fixed aspect ratio which e.g. may be a 21:9, 16:9 or 4:3 aspect ratio. In such cases, the presentation of the primary video content on the display 201 will depend on the specific aspect ratio of the primary video content as well as the specific aspect ratio of the display. Thus, the primary video content will typically be represented in a presentation window that depends on the specific current conditions. Furthermore, in some cases the entire window of the video signal will be presented on the display 201 whereas in other scenarios only a sub-window will be presented. Additionally, in some scenarios the presentation window is only a subset of the full display window of the display 201.

In some embodiments, the presentation characteristic comprises an indication of a presentation window for the secondary video content relative to the full display window of the video signal. Also, in some embodiments, the presentation characteristic comprises an indication of a presentation window for the secondary video content relative to the full display window of the display 201. It will be appreciated that in some embodiments, the presentation characteristic will be indicative of a presentation window relative to both the video signal and the display 201. It will also be appreciated that the presentation characteristic may provide an indirect indication of the presentation window for the secondary video.

For example, the presentation characteristic may be indicative of a presentation window for the primary video content and this may provide an indirect indication of a presentation window for the secondary video content. For example, if the primary video content is 16:9 content communicated as a letterboxed 4:3 signal, a presentation characteristic indicating that the primary video content is presented in a 16:9 window on a 16:9 display can be used as an indication that the secondary video content must be overlaid within a central 16:9 presentation sub-window of the 4:3 video signal (since any other part of the 4:3 signal will be cropped). Thus, the presentation characteristic may directly or indirectly indicate a safe presentation window for overlay content within the full window of the input signal.

As another example, the presentation characteristic may indicate that the primary video content is shown within a 21:9 presentation window of a 16:9 display, i.e. in a letterbox format. In this example, the overlay processor 105 may calculate a suitable presentation window for secondary video content to be within the central 16:9 window of the video signal but outside the central 21:9 presentation window. Thus, a presentation window for the secondary video content may be determined to correspond to the visible but unused areas of the video signal.

As yet another example, the presentation characteristic may indicate that the primary video content is shown within a 4:3 presentation window of a 16:9 display, i.e. in a pillarbox format. In this example, the overlay processor 105 may calculate a suitable presentation window for secondary video content to be outside the central 4:3 presentation window of the display. Thus, a presentation window for the secondary video content may be determined to correspond to the unused areas of the full window of the display 201.

In the previous examples, the presentation characteristic has comprised an aspect ratio characteristic. However, it will be appreciated that many other examples are possible.

For example, the presentation characteristic may provide an indication of a color characteristic which specifically may be a desired color characteristic for the overlay content or a color characteristic of the primary video content. For example, the presentation characteristic may indicate that the overlay content should avoid some colors or that it should attempt to use certain colors. Specifically, the presentation characteristic may indicate a color scheme that is (possibly preferably) to be used for the overlay content. This may for example allow overlay information to be presented in a color scheme associated with the display manufacturer or the provider of the primary video content. As another example, the color characteristic may indicate dominant colors of the primary video content such that the overlay content can be optimized relative to this. For example, during an underwater scene, the presented primary video may predominantly be in a blue color range, and the presentation characteristic may allow the overlay content to be provided in a contrasting color. If the presented video changes to be another dominant color (e.g. green for a football game), the presentation characteristic may be changed to a contrasting color of green thereby allowing the overlay content to change color for increased visibility. As another example, for e.g. subtitle overlays, the presentation characteristic may indicate colors that should not be used. The colors to avoid may e.g. be identified by analyzing the presented video in the area in which the subtitles are being overlaid. Specifically, the presentation characteristic may indicate a desire for the overlay to use more or less complementary colors or grey values, i.e. with a sufficient delta Lab color difference to the primary video content in the relative area.

In some embodiments, the presentation characteristic may directly indicate a size of a display window used for the presentation of the primary video content or the secondary video content. The size may for example be indicated by a number of scan lines or a pixel dimension.

This may allow improved overlaying in many scenarios. For example, a television may in addition to presentation of the primary video signal also be capable of presenting secondary video content received from another source. E.g. a video signal may be received from a video camera e.g. monitoring a sleeping baby. This video signal may be superimposed on the main television program thereby allowing the viewers to continuously monitor the sleeping baby while watching television. Furthermore, the television may be arranged to allow the user to manually select the size of the overlay video window used of the baby monitoring and this size may be communicated to the video camera. Accordingly, the video camera may adapt the size of the video signal to match that of the selected overlay window thereby reducing the bandwidth, removing the need for resizing in the television and typically improving quality.

Also, in some embodiments, the presentation characteristic may indicate a specific location for a presentation window of the primary video content or secondary video content. For example, the pixel locations for diagonal corners of a presentation window to be used for secondary video content may be communicated to the overlay source 105 which accordingly may proceed to provide secondary video content adapted to this window. For example, the overlay source 105 may generate graphics data defining a graphic object matching the dimensions and location of the overlay window. Also, the overlay video content may be adapted to match the specific location of the overlay window. E.g. a graphic object corresponding to a character may be modified to always look towards the center of the screen or to point to a specific location regardless of where it is positioned on the display 201.

In some embodiments, the presentation characteristic may be indicative of a pixel value range for presentation of the primary video content or secondary video content. Each pixel value may indicate a luminance and/or color characteristic for a pixel. For example, each pixel value may correspond to a set of one or more color/luminance values. E.g. each pixel value may be an RGB or YUV value.

In some embodiments, the display unit 101 may evaluate a characteristic of the current pixel values in the image(s) (e.g. averaged over a certain duration) and communicate this to the overlay processor 105. The overlay processor 105 may then adjust the overlay video content accordingly, e.g. by dimming the overlay video during dark scenes of the primary content and increasing the brightness for light scenes.

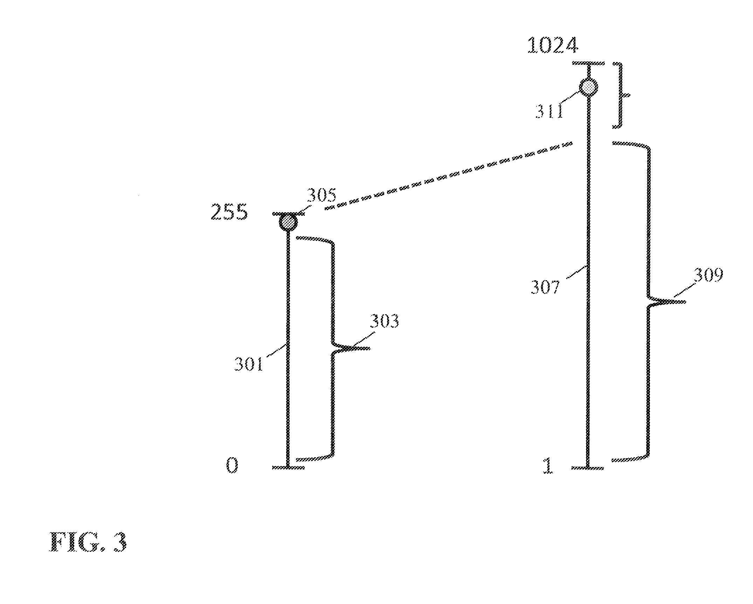

In some embodiments, the presentation characteristics may be indicative of a dynamic range used for the primary video content or the secondary video content (note that a communicated optimal "range" for e.g. secondary information may be a small as a single color or grey value point). For example, as illustrated in Fig. 3, the display unit 201 may have a luminosity range or color gamut 301 represented by (e.g. RGB) pixel values from 0 to 255. In this example, the display unit may condense the luminosity range or color gamut 303 used for the primary video content to be a subset of the total luminosity range or color gamut 301. For example, bright areas may be clipped to relatively lower values. The resulting luminosity or color gamut range that is not used by the primary video content may then exclusively be used by secondary video content, and this may be communicated to the overlay source 105 which can then proceed to adapt the overlay content accordingly. Thus, specifically, it may arrange for overlay content 305 to be located outside the luminosity range or color gamut 303 of the primary video content.

The approach may be particularly advantageous for scenarios using high dynamic range displays. Specifically, displays have been proposed that have an increased dynamic range compared to conventional displays. This may e.g. be achieved by dynamically adjusting the backlight thereby allowing both darker values (by reducing the backlight) and brighter values (by increasing the backlight) to be presented. For such high dynamic range displays, an increased total luminosity range or color gamut 307 may be provided such as for example represented by pixel values from 1 to 1024. Thus, when presenting a standard dynamic range video signal on a high dynamic range display unit, the normal dynamic range 301 may be converted to the new dynamic range 307 so as to utilize the expanded dynamic range. Then the high dynamic range need not fully be used for expanding the primary video solely, but some regions can be reserved for e.g. subtitles, and this can be intelligently coordinated with the primary video range. The source device may apply complicated algorithms taking e.g. into account the human visual system to optimally coordinate the display of primary and secondary signal (thereto the characteristic communicated to the video source may even include viewing environment parameters, e.g. on the basis of a captured surround image by a camera included in the display).

In an embodiment of the invention, this conversion is however arranged such that only part 309 of the high dynamic range 307 is used to represent the primary video content. For example, the input pixel values from 0 to 255 may be converted to a dynamic range from 1 to, say, 960 thereby leaving a range from 961 to 1024 to be exclusively used for overlay video content. In the example, a presentation characteristic indicating that the current display unit is a high dynamic range display having this range reserved for overlay video content is communicated to the overlay source 105 which accordingly can proceed to generate or adapt the secondary video content to specifically utilize this reserved range of the luminosity range or color gamut. This may e.g. be very useful for embodiments wherein the overlay content is particularly important and requires the user's immediate attention. It may e.g. be very useful for alarm systems that provide secondary video content in case of an alarm.

Similarly, the display apparatus may communicate to the source (e.g. a webpage with incorporated video content) that the display has preferred colors, e.g. a Philips blue based color scheme, and all incoming signals may be adjusted for that (e.g. the white point of the video adjusted from yellowish to more bluish). This can also be coordinated with the ambilight (e.g. if an icy surround ambiance is created, the subtitles may be matched or contrasted with that).

In some embodiments, the display unit 101 may additionally communicate an indication of a full display window for the display 201 to the external source. For example, the presentation characteristic may indicate that the aspect ratio that is currently used for the primary video content, and the full display window may be represented by the aspect ratio for the display 201. The overlay source 105 may use this information to adapt the secondary video content. For example, if the full window display has a 2.39:9 aspect ratio and the current viewing mode is a 16:9 aspect ratio, the overlay source 105 can determine that the current viewing mode provides a pillar box presentation, and thus that the primary video content is presented with a black bar on each side. The overlay source 105 may then proceed to generate video content that is particularly suitable for the unused areas when a 16:9 image is presented on a 2.39:1 display.

In some embodiments, the presentation characteristic may be indicative of an availability of a secondary display means on which the secondary video content may be presented. For example, if the display panel unit 103 is a conventional display, the secondary video content may be presented superimposed on the primary video content on the single display panel. However, some display units may comprise additional display means that when available can alternatively or additionally be used to present the secondary information. For example, televisions have been developed which in addition to the main display comprise one or more light sources that radiate light outwards of the display. Specifically, Philips Ambilight^{™} televisions enhance the visual presentation of the display by also emitting light to the side, back or front of the display. This light is typically colored to match a color characteristic of the displayed image. In some televisions, the light is divided into different regions such that different colors may be emitted at the top, sides and bottom of the display with the color in each region being determined to correspond to a dominant color in a corresponding region of the image being displayed.

The presentation characteristic may for example indicate that such Ambilight^{™} functionality is present, and accordingly the secondary video content may be adapted to e.g. include data specifying which colors should be applied by the Ambilight^{™}. As another example, the secondary video content may be modified to result in the generation of a suitable Ambilight^{™} radiation. For example, the color of the secondary video content may be modified when Ambilight^{™} is present in order to provide a desired Ambilight^{™} presentation.

As another example, the presentation characteristic may indicate that the display unit 101 comprises an additional display screen that can be used to present the secondary video content. The overlay source 105 may accordingly modify the overlay content to match the characteristics of the second display. E.g. rather than using a dimension suitable for video content superimposed on the primary video content, the overlay source 105 may proceed to generate secondary video content that has a dimension which matches the secondary display panel.

In the example of Fig. 2, the overlay source 105 and video source 103 are separate entities and specifically are not coupled together by any other means than the display unit 101. This may be practical in many embodiments, and the system may specifically allow secondary video content to be presented to the user together with primary video content that is not related to the secondary video content. For example, the secondary video content may provide information from a device that is entirely unrelated to the video source 101 for the first video source. As a specific example, overlay information may be provided from a kitchen appliance and presented to the user as overlaid information on a film or television program being watched. E.g. when a viewer is watching a film, overlay video content may be presented that informs him e.g. that the dinner has finished cooking in the oven.

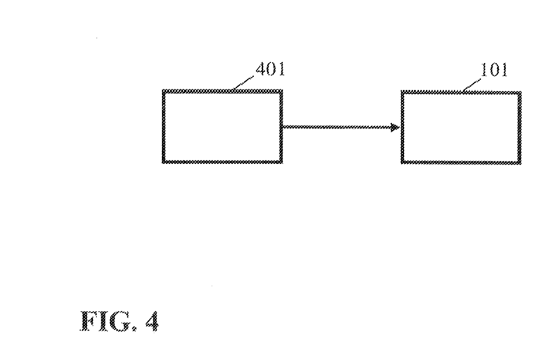

However, in other embodiments, the video source 103 and the overlay source 105 may be the same entity. In particular, the secondary video content may be combined with the primary video content prior to being received by the display unit 101. Thus, the video signal received by the display unit 101 may specifically comprise frames wherein the secondary video content is already overlaid the primary video source. An example of such a system is illustrated in Fig. 4 wherein the display unit 101 is coupled to a single source 401 that provides a video signal comprising both the secondary and primary video content.

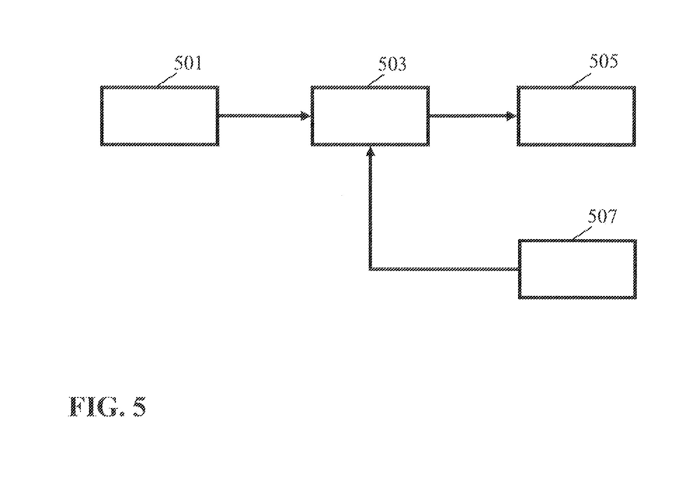

Fig. 5 illustrates elements of the single source 401 in more detail. The single source 401 comprises a content source 501 which provides primary video content. The content source 501 may for example receive the primary video content from an external or internal source. For example, the single source 401 may be DVD player where the primary video content is read from a DVD, a satellite receiver wherein the primary video content is received from a received satellite transmission etc.

The content source 503 is fed to an overlay processor 503 which is arranged to generate a video output signal that comprises the primary video content overlaid by secondary/overlaid video content. In the example, the overlay processor 503 generates the overlay video content itself and overlays this on the video signal. The overlay video content may for example be user interface information, subtitles or graphic objects etc.

The video output signal is fed to a video port 505 coupled to the overlay processor 503. In the example, the video port 505 comprises a connector for connecting a video cable (that can also be connected to the display unit 101). However, in other embodiments, other means of communicating the video signal to the remote display unit 101 may be used including e.g. a wireless video connection or a data network.

In the example, the format of the output video signal is fixed. Specifically, the video signal may have a fixed aspect ratio of 16:9 and a fixed resolution. However, the characteristics of the primary video content may vary. Specifically, the primary video content may have an aspect ratio of 4:3, 16:9 or 21:9, Furthermore, the primary video content may in some cases include geometric pre-distortion such as an anamorphic compression to compensate for a subsequent anamorphic stretching by the display unit 101. Thus, the exact formatting of the primary video content within the window of the output signal may vary dynamically and the primary video content may specifically be included in a pillar box, a letter box, a combined pillar and letter box, a full size window, a geometrically compressed full size window etc.

The formatting of the primary video content within the window of the video signal is typically based only on predetermined rules and the format of the primary video content. However, the presentation of the primary video content by the display unit 101 depends on the specific characteristics and settings of the display unit 101. Accordingly, the optimal overlaying of the secondary video content on the window of the video signal depends on the specific current operation of the display unit 101. The single source 401 furthermore comprises a control input 507 which is arranged to receive the presentation characteristic from the display unit 101. The control input 507 is coupled to the overlay processor 503 and provides the presentation characteristic thereto. The overlay processor 503 then uses the presentation characteristic to adjust a characteristic of the overlay video content. The presentation characteristic may specifically be provided to the control input 507 via the same video cable that provides the video signal to the display unit 101.

In the specific example, the combination of the primary video content and the secondary video content is accordingly performed by the single source 401 and a single video signal is provided to the display unit 101. Thus the display unit 101 may simply present the received video signal without any consideration or even knowledge of it comprising any secondary video content. In other words, in the example of Fig. 4, the display unit 101 may not comprise the secondary video input 207.

It will be appreciated that most of the examples previously described for the separate external overlay source 105 are equally applicable to the single source 401.

Thus, the overlay processor 503 may adjust the overlay video content in response to the presentation characteristic differently than it will change the primary video content. In particular, the operation on the primary video content may be independent of the presentation characteristic whereas the overlay video content processing may dependent thereon.

In the system, the display unit 101 may specifically define a rendering/presentation window for the single source 401 such that the intermediate content format of the video signal does not contain information that will be dropped by the display unit 101 when presenting the content to the viewer. The display unit's 101 processing, current view mode and screen aspect ratio information may all be used to optimize the output of the single source 101.

The approach may be particularly advantageous for source device's that may be used with displays having different aspect ratios. E.g. with the introduction of display devices having non-standard aspect ratios (other than 4:3 or 16:9), problems traditionally often occur when optimizing the output of source devices as these often only support 4:3, 4:3 Pan & Scan and/or 16:9 displays. Furthermore, distribution video formats only support limited number of aspect ratios, such as e.g. only 4:3 or 16:9.

As a consequence, e.g. a 2.39:1 aspect ratio movie is typically distributed in a letterboxed 16:9 format. However, as the source device typically is not aware of the aspect ratio of the content itself, it will output the 16:9 format video signal and will render overlay information such as user interface data, graphics, subtitles etc. using the 16:9 format. However, in contrast to typical source devices, display units (especially for a non-standard aspect ratio display) often have advanced algorithms that detect the original aspect ratio of the content (e.g. using a black bar detector). Accordingly, a display unit typically adapts its display mode to provide an improved presentation of the content. E.g. a 2.39:1 display unit may simply strip off black bars that might be present in the 16:9 video signal from the source device by zooming in on the central 2.39:1 window. As a consequence, the secondary overlaid information outside this window will be cropped by the display. Furthermore, if the overlay video content is generally restricted to the central 2.39:1 window of the video signal, a disadvantageous presentation for a 16:9 content will result as the overlay information is centered on the image and therefore is perceived to be more intrusive.

In the system of Fig. 4, the display unit 101 can inform the single source 401 of which presentation/rendering window to use so that the overlaying of the secondary video content can be optimized in the intermediate distribution video format of the video signal transmitted from the single source 401 to the display unit 101.

In this way, the advanced processing of the display unit 101 is used to configure the single source 401 without necessitating the additional cost and complexity that would be required for the single source 401 if this was to analyze the content to determine a current aspect ratio.

The approach may also allow an optimum overlaying even if the display unit 101 does not select the predicted viewing mode. For example, a user of the display may override the automatic selection to select a different viewing mode. Many displays provide a manual zoom mode wherein the user can select from a number of preset zoom modes (e.g. whether to crop the image, present in a letter box format, pillar box format or both etc). In the system, the display unit 101 may generate the presentation characteristic to indicate which manual mode has been selected (either directly or indirectly by indicating the aspect ratio and/or size of the visible window).

Thus, in the specific example, the single source 401 device uses a fixed 16:9 format with primary video content having an aspect ratio higher than 16:9 being distributed in a letterboxed format using known standards (e.g. DVD). Also, the single source 401 does not include any functionality for deriving the exact aspect ratio of the primary video content and thus does not know the aspect ratio of this and accordingly cannot analyze or predict the viewing mode used by the display.

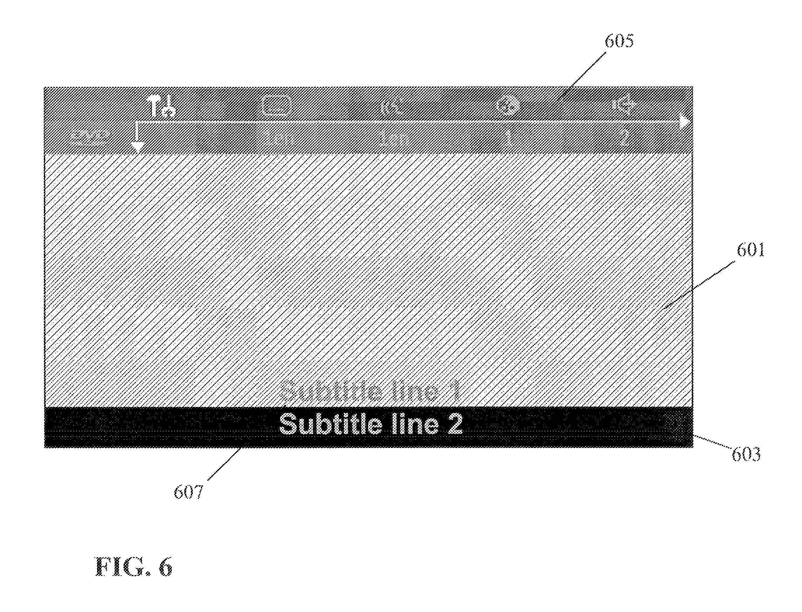

A conventional video source will in such a scenario render secondary video content (e.g. user interface, graphics such as icons, subtitles etc) using the full output window. Therefore, (part of) this content will be placed upon the black bars is indicated in Fig. 6 wherein 2:39 content 601 is presented in a letter box format with horizontal black bars 603 with an overlaid user interface graphic 605 and subtitles 607 that (partly) fall on the black bars 603.

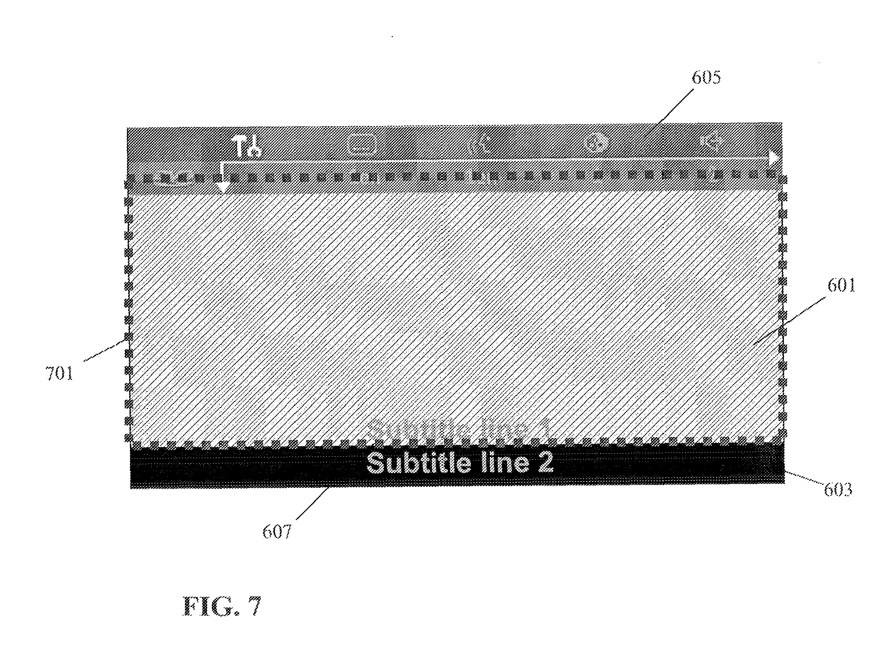

However, when a 2:39:1 display detects that its input content contains black bars, it can derive the original aspect ratio of the primary video content (e.g. by analyzing the received video signal or from additional meta information provided with the signal) and may accordingly zoom in on the received signal to only present the central 2:39:1 window 701 as indicated in Fig. 7. Thus, for a conventional system at least part of the user interface graphic 605 and the subtitles 607 are rendered invisible by this approach.

However, in the system of Fig. 4, the display unit 101 detects that only the central 2:39:1 window is presented/visible and it communicates a presentation characteristic to the single source 401 indicating this .Thus, a window characteristic for the presentation window of the output video signal is communicated to the single source. In the specific example, the aspect ratio of the presentation window may simply be used (e.g. the 2.39:1 aspect ratio) with the single source 401 assuming that it is the central window. However, in other examples, the size (e.g. in pixels) or position of the window within the format of the video signal may also be indicated. This may particularly be advantageous in embodiments wherein the crop/zoom of the received video signal is continuously varied.

Thus, in the example, the display unit 101 determines a presentation window suitable for use by the single source 401 for secondary video content and communicates an indication thereof the single source 401. The single source 401 then proceeds to adapt the overlaying of secondary video content on the video signal in response to this presentation characteristic.

More specifically, the overlay processor 503 may determine a window characteristic for a window of the output video signal which corresponds to the window used for the primary video content. This window can specifically correspond to the currently visible window 701 which is indicated by the presentation characteristic. In the example, the presentation characteristic is merely indicated by an aspect ratio for the presented video content and the overlay processor 503 determines the visible window of the video signal from this aspect ratio and the aspect ratio of the video signal. For example, if the current presentation window is 16:9 and the video signal uses a 16:9 aspect ratio, then the visible window is equal to the entire window of the video signal (corresponding to Fig. 6). However, if the current presentation window is 2.39:1 and the video signal uses a 16:9 aspect ratio, then the visible window is equal to only the central 2.39:1 window 701 of the full window of the video signal (corresponding to Fig. 7).

In the example, the overlay processor 503 then proceeds to generate the overlay content such that it matches the determined window. Specifically, the overlay processor 503 proceeds to overlay the secondary video content such that it is entirely within the visible window. However, in the example, the overlay processor 503 also biases the secondary video content towards the edges of the window rather than merely concentrating it in the center. For example, for a 16:9 window presentation of a 2:39:1 primary video content, the overlay content is moved towards the edges and thus fully or partially outside the window that corresponds to the primary video content (i.e. the 2:39:1 window 601). Thus, in this situation the overlay content objects 605, 607 are kept within the visible window of the display unit 101 but are fully or partially located on the black bars 603 thus reducing the intrusion on the primary video content.

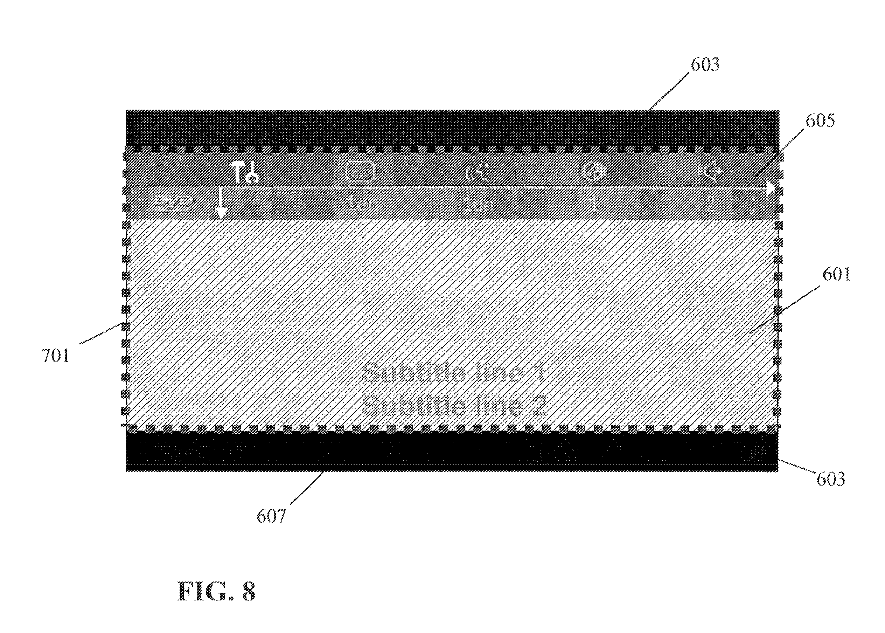

However, if the viewing mode switches to 2:39:1, the overlay processor 503 receives this information and dynamically switches the overlay processing. Specifically, the overlay video objects 605, 607 are positioned within the new visible window 701 as illustrated in Fig. 8. Thus, the overlay video objects 605, 607 are moved to be within the visible window thus resulting in full visibility on the display despite the cropping performed by the display unit 101.

It will be appreciated that the visible window 701 may be selected automatically by the display unit 101. However, as previously mentioned, the visible window 701 may also in many embodiments be selected manually by a user. This may result in the visible window 701 that is indicated by the presentation characteristic e.g. being smaller than the actual video content, or larger, or partially between them, or indeed anything the user selects. Thus, the approach may allow the overlay content to automatically be adapted to fit within any kind of window selected manually by the user. Thus, the user will see that whereas his manual selections substantially changes the presentation of the primary video content, the overlay information (e.g. subtitles etc) automatically adjusts itself to fit within the selected window.

In some embodiments, the presentation characteristic may be indicative of a characteristic of a sub-window of the current visible window 701 of the output video signal. In such embodiments, the overlay processor (503) may be arranged to adjust the second video content to be within the sub-window. Specifically, the sub-window may correspond to the visible window wherein at least one dimension (e.g. height or width) is reduced by between 20% and 3%. Thus, the sub-window may be a smaller window than the visible window and may be located within the window.

In some embodiments, the presentation characteristic may be generated to indicate an overlay window that is smaller than the actual presented window of the video signal fed to the display unit 101. This may improve the presented image in many scenarios.

For example, the display unit 103 may be arranged to automatically detect black areas. If black areas are detected, it may zoom the presented view in order to reduce these black areas. However, in many scenarios the presented video content is initially overlaid with objects that extend into the black areas. For example, as illustrated in Fig. 6, the display unit 101 may initially display an image in a letterbox format. However, due to the overlaying of information by the single source 401, the overlay contents are initially placed in the black areas. In particular, subtitles will typically be placed (at least partially) in the lower black bar. As the detector typically cannot differentiate this from the video content, it results in the display unit 101 not zooming in on the video content (or similarly - it may be undesirable to zoom in on the video content in this scenario as it will render the subtitles partially invisible). This situation may be static resulting in a suboptimal operation.

However, in the example, the display unit 101 informs the single source 401 of the visible area of the provided video signal (the "viewport"). However, if this indication is identical to the actually visible area, the scenario of the previous paragraph may occur. Therefore, in some embodiments, the reported window is not the visible window itself but rather is a sub-window thereof. Thus, the reported viewport is smaller than the actually visible viewport.

As a consequence, the single source 401 will adjusts the overlay objects (specifically the subtitles) to fall within the reported sub-window/viewport. This effectively results in the overlay items being moved further into the primary video content such that the overlap into the black areas is reduced.

However, this further results in an increased black area (with no overlay objects being present) in the video signal. Consequently, the black bar/area detector of the display unit will seek to zoom in to remove this black area from the presented image. This further zooming-in then leads to a reduction of the visible window and consequently to a reduced sub-window. This is then reported to the single source 401 resulting in the overlay content being moved even further in to fit the new sub-window. This process may be repeated until the primary video content fills the visible display window (i.e. no black areas are detected even when all overlay is within the smaller sub-window. At this point a stable and static situation is reached. Thus, the approach will automatically result in a gradual zooming in to the primary video content with an automatic movement of the overlay content into the primary video content.

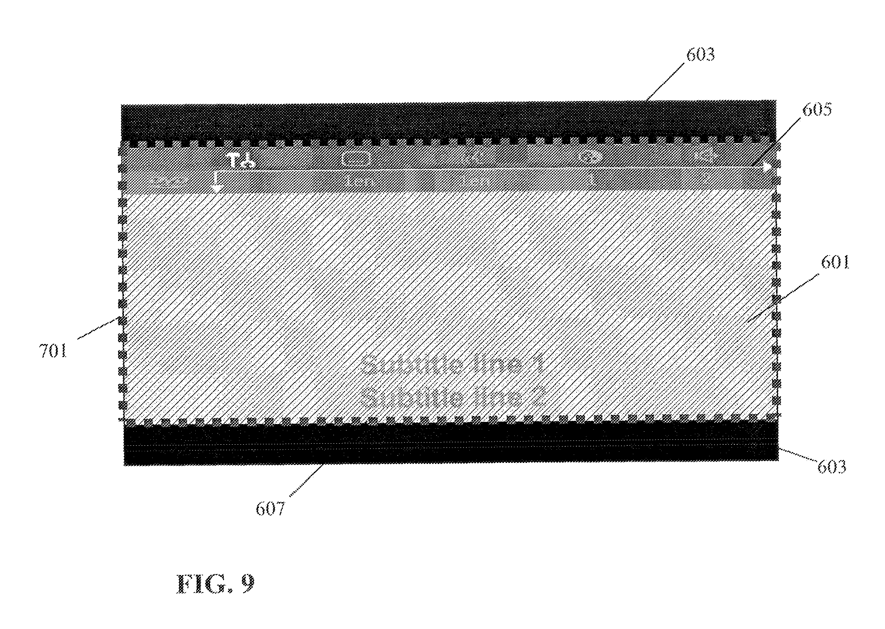

In some embodiments, a dimension of one or more of the overlay video objects may be modified in response to the presentation characteristic. For example, the height of the user interface video object 605 may be reduced for a 2:39:1 aspect ratio of the visible window relative to the height for a 16:9 aspect ratio. For example, the height may be set to, say 1/10^{th} of the total height of the window. Thus, in some examples the overlay video content may be scaled in one or more directions so that e.g. the relative size and aspect ratio of the information is kept constant. Such an approach may provide overlay graphics that are more aesthetic and suitable for the specific display mode. An example of such an approach for the specific example is illustrated in Fig. 9.

It will also be appreciated that in some embodiments, the overlay processor may apply a geometric distortion of an overlay video object based on the presentation characteristic. E.g. in the previous example, the height was scaled differently than the width thereby resulting in a geometric distortion of the user interface graphics 605. Another example, is the application of an anamorphic compression if the presentation characteristic is indicative of anamorphic stretching being performed by the display unit 101 (as previously described with reference to Fig. 2).

In some embodiments the content of the secondary video content may be changed in response to the presentation characteristic. Indeed, the presentation characteristic may provide a variety of information about the presentation options or parameters for the presentation of the secondary video content and this may be used to adjust not only how such secondary video content is presented but also what is included in the video content.

As a specific example, the single source 401 may be a small portable media player with a built in display of, say, 1-2 inches. When this is connected to the display unit, the primary video content may be scaled to the full display size of the display 201. However, if the same scaling is applied to overlay information, such as user interface graphics or e.g. song titles etc; this content will be inappropriately large. Accordingly, the media player may automatically adjust the size of the overlay content to be appropriate for the display size. Thus, in the example of a single source 401, the presentation characteristic may be a relatively simple indication of a characteristic or capability of the display, such as a size of the window/display in which the content is presented. Thus, if the media player is connected to a 14" monitor, it may proceed to generate overlay text with a size of e.g. 1/10^{th} of the height of the full window. However, if the media player is connected to a 50" monitor, it may proceed to generate overlay text with a size of e.g. 1/25^{th} of the height of the full window. Also, in some embodiments, the content or amount of secondary video content may be adjusted accordingly. For example, a music video may be overlaid with text indicating the title/artist for a small display, by text indicating song lyrics for a larger display and e.g. title, lyrics and additional information about the artist for a very large display. The location of the different content may furthermore be varied e.g. in line with the previously provided examples.

In some embodiments, the single source 401 may further generate the secondary video content in response to a preference profile and the presentation characteristic. E.g. for the media player example, the user may define a profile that indicates overlay content suitable for different video contents. This preferred overlay content may either be specific for a specific content item, such as graphic objects (flowers, hearts, firework etc icons) that are overlaid a specific picture, or may e.g. be a more general indication (e.g. the user prefers a pink frame when watching music videos on the media player). However, this overlay customization may be made dependent on the presentation characteristic. For example, the indicated personal overlay content may be included whenever the primary video content is presented on a small screen (e.g. less than 7" thus assuming that the media player is used in a private scenario) but may be removed when presented on a larger screen (when it is less likely to be a private scenario).

In some embodiments, the single source 401 (or the video source 103) may be arranged to modify a parameter of the first video content in response to the presentation parameter. For example, the content source 501 may be arranged to receive standard definition video content and to up-scale this to a high definition resolution. In such a scenario, the upscaling may be made dependent on the presentation characteristic and may specifically be switched off for any display mode that will result in unused areas (black bars) when the primary video content is presented on the display.

Specifically, when up-scaling 2.39:1 letterboxed content e.g. to the high definition standard 1080p, the output video signal will be high definition but still contain black bars. The display unit 101 will typically strip off the black bars and upscale the resulting content to the final 1080 lines of the display 201. Thus, this approach will result in a cascaded upscaling with the resulting quality degradation. Instead, the content source 501 may avoid any upscaling and allow this to be entirely performed as a single step operation by the display 101.

It will be appreciated that the above description for clarity has described embodiments of the invention with reference to different functional units and processors. However, it will be apparent that any suitable distribution of functionality between different functional units or processors may be used without detracting from the invention. For example, functionality illustrated to be performed by separate processors or controllers may be performed by the same processor or controllers. Hence, references to specific functional units are only to be seen as references to suitable means for providing the described functionality rather than indicative of a strict logical or physical structure or organization.

The invention can be implemented in any suitable form including hardware, software, firmware or any combination of these. The invention may optionally be implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units and processors.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

Furthermore, although individually listed, a plurality of means, elements or method steps may be implemented by e.g. a single unit or processor. Additionally, although individual features may be included in different claims, these may possibly be advantageously combined, and the inclusion in different claims does not imply that a combination of features is not feasible and/or advantageous. Also the inclusion of a feature in one category of claims does not imply a limitation to this category but rather indicates that the feature is equally applicable to other claim categories as appropriate. Furthermore, the order of features in the claims do not imply any specific order in which the features must be worked and in particular the order of individual steps in a method claim does not imply that the steps must be performed in this order. Rather, the steps may be performed in any suitable order. In addition, singular references do not exclude a plurality. Thus references to "a", "an", "first", "second" etc do not preclude a plurality. Reference signs in the claims are provided merely as a clarifying example shall not be construed as limiting the scope of the claims in any way.

## Claims

1. A display apparatus comprising:
- a display (201);
- means (203) for receiving a video signal comprising first video content for presentation on the display (201);
- means (209) for determining a first characteristic for presentation of the first video content on the display (201);
- means (211) for determining a presentation characteristic for presentation of second video content on the display simultaneously with the first video content in response to the first characteristic; and
- means (213) for communicating the presentation characteristic to an external source (105) of the second video content.

2. The display apparatus of claim 1 wherein the presentation characteristic is indicative of at least one of:
- a size of a display window for presentation of the second video content;
- an aspect ratio of a display window for presentation of the second video content;
- a position of a display window for presentation of the second video content;
- a size of a display window for presentation of the first video content;
- an aspect ratio of a display window for presentation of the first video content;
- a position of a display window for presentation of the first video content;
- a pixel value range for presentation of the second video content;
- a pixel value range for presentation of the first video content; and
- a color characteristic.

3. The display apparatus of claim 1 wherein the presentation characteristic is a presentation window characteristic.

4. The display apparatus of claim 3 wherein the display apparatus is further arranged to communicate an indication of a full display window for the display (201) to the external source.

5. The display apparatus of claim 3 further arranged to switch between different presentation window modes for the first video content and wherein the presentation window characteristic is indicative of a current presentation window mode.

6. The display apparatus of claim 1 wherein the presentation characteristic is indicative of a geometric distortion of the first video content when presented on the display.

7. The display apparatus of claim 1 wherein the presentation characteristic is indicative of an availability of a secondary display means for presenting the second video content.

8. A video apparatus comprising:
- a video port (505) for coupling the video apparatus to a display unit;
- a video content source (501) for providing first video content;
- an overlay processor (503) for generating an output video signal comprising both the first video content and overlay video content and for providing the output video signal to the video port;
- means (507) for receiving a presentation characteristic from the display unit, the presentation characteristic being indicative of a presentation of the output video signal by the display unit; and wherein
- the overlay processor (503) is arranged to adjust a characteristic of the overlay video content in response to the presentation characteristic.

9. The video apparatus of claim 8 wherein the presentation characteristic comprises a rendering window characteristic for a presentation window for the output video signal; the presentation window characteristic comprising at least one of an aspect ratio, a size and a position of the presentation window.

10. The video apparatus of claim 8 further comprising means for determining a content window characteristic for a window of the output video signal corresponding to the first video content; and wherein the overlay processor (503) is further arranged to adjust a characteristic of the overlay video content in response to the content window characteristic.

11. The video apparatus of claim 8 wherein the overlay processor (503) is arranged to select a position of an overlay video object of the overlay video content in response to the presentation characteristic.

12. The video apparatus of claim 8 wherein the overlay processor (503) is arranged to select a dimension of an overlay video object of the overlay video content in response to the presentation characteristic.

13. The video apparatus of claim 8 wherein the overlay processor (503) is arranged to select a geometric distortion of an overlay video object of the overlay video content in response to the presentation characteristic.

14. The video apparatus of claim 8 wherein the presentation characteristic is indicative of a characteristic of a current visible window of the output video signal; and the overlay processor (503) is arranged to adjust the second video content to be within the current visible window.

15. The video apparatus of claim 14 wherein the presentation characteristic comprises an aspect ratio for a displayed signal, and the overlay processor (503) is arranged to determine the current visible window in response to the aspect ratio and an aspect ratio for the output video signal.

16. The video apparatus of claim 14 wherein the overlay processor (503) is arranged to modify a position at least one graphic object to be adjacent an edge of the current visible window.

17. The video apparatus of claim 14 wherein the overlay processor (503) is arranged to locate at least some of the second video content outside a window corresponding to the first video content but within the current visible window when the window corresponding to the first video content is smaller than the current visible window.

18. The video apparatus of claim 8 wherein the presentation characteristic is indicative of a characteristic of a sub-window of a current visible window of the output video signal; and the overlay processor (503) is arranged to adjust the second video content to be within the sub-window.

19. The video apparatus of claim 8 wherein the video content generator (501) is arranged to modify a parameter of the first video content in response to the presentation characteristic.

20. The video apparatus of claim 19 wherein the parameter is an upscaling parameter.

21. A method of operation for a display apparatus including a display (201); the method comprising:
- receiving a video signal comprising first video content for presentation on the display;
- determining a first characteristic for presentation of the first video content on the display (201);
- determining a presentation characteristic for presentation of second video content on the display (201) simultaneously with the first video content in response to the first characteristic; and
- communicating the presentation characteristic to an external source (105) of the second video content.

22. A method of operation for a video apparatus including a video port for coupling the video apparatus to a display unit; the method comprising:
- providing first video content;
- generating an output video signal comprising both the first video content and overlay video content;
providing the output video signal to the video port;
- receiving a presentation characteristic from the display unit, the presentation characteristic being indicative of a presentation of the output video signal by the display unit; and
- adjusting a characteristic of the overlay video content in response to the presentation characteristic.
